# EUROPEAN PATENT APPLICATION

(11) **EP 4 231 648 A1**
(43) Date of publication of application: **23.08.2023**
(21) Application number: 21879126.7
(22) Date of filing: 26.08.2021
(51) Int. Cl.: H04N 21/2187, H04N 21/239, H04N 21/258, H04N 21/422, H04N 21/472

(54) **METHOD AND APPARATUS FOR INTERACTION IN LIVE STREAMING**

(30) Priority: 16.10.2020 CN 202011106317
(71) Applicant: Beijing Dajia Internet Information Technology Co., Ltd., Beijing 100085 (CN)
(72) Inventor: ZHU, Dongxia, Beijing 100085 (CN)
(74) Representative: Angerhausen, Christoph
(86) International application number: PCT/CN2021/114794
(87) International publication number: WO 2022/078080

(57) **Abstract**

The disclosure relates to a method and an apparatus for live stream interaction, which belongs to a field of network live stream technologies. The method includes: receiving a voice instruction of an anchor user, and parsing interaction information carried in the voice instruction; acquiring interaction content based on the interaction information; and generating a first interaction request based on the interaction content, and sending the first interaction request to a second client, the first interaction request is configured to trigger the second client to display an operation control associated with the interaction content on a live stream interface.

## Description

### CROSS-REFERENCE TO RELATED APPLICATION

The disclosure claims the priority to Chinese Patent Application No. 202011106317.5 filed to China National Intellectual Property Administration on October 16, 2020, the entire content of which is incorporated herein by reference.

### TECHNICAL FIELD

The disclosure relates to a field of network live stream technologies, and particularly to a method and an apparatus for live stream interaction.

### BACKGROUND

With the development of computer technology, video live stream has become the trend of today. During a process of video live stream performed by a user using a live stream application, a client at an anchor user side of a live stream room uploads the acquired live stream video to a live stream server in real time, and a client at an audience user side of the live stream room acquires the live stream video from the live stream server, and the live stream video is played on a live stream interface of the client at the audience user side.

In the related art, when an audience user has a use requirement of interacting with an anchor user, the audience user usually manually clicks on an operation interface of the client after hearing an oral broadcast instruction of the anchor user to invoke a comment box of the live stream application, inputs the relevant comment content, and clicks to send, and then the comment content is displayed on the display interface of the client at the anchor user side and/or the audience user side.

### SUMMARY

The disclosure provides a method and an apparatus for live stream interaction. The technical solution of the disclosure is as follow:
According to a first aspect of embodiments of the disclosure, a method for live stream interaction is provided. The method is applied to a first client, and includes: receiving a voice instruction of an anchor user, and parsing interaction information carried in the voice instruction; acquiring interaction content based on the interaction information; and generating a first interaction request based on the interaction content, and sending the first interaction request to a second client, the first interaction request is configured to trigger the second client to display an operation control associated with the interaction content on a live stream interface.

In some embodiments of the disclosure, the method further includes: receiving a second interaction request sent by the second client by triggering the operation control, the second interaction request including a live stream account identifier of the second client; and displaying the live stream account identifier and the interaction content on a live stream interface of the first client.

In some embodiments of the disclosure, acquiring the interaction content based on the interaction information includes: based on the interaction information comprising an interaction instruction word, comparing the interaction instruction word with a preconfigured interaction keyword; and based on the interaction instruction word matching the interaction keyword, acquiring the interaction content based on the interaction information.

In some embodiments of the disclosure, acquiring the interaction content based on the interaction information includes: identifying interaction semantics corresponding to the interaction instruction word from the interaction information by using a preconfigured semantics identification rule; and generating the interaction content corresponding to the interaction semantics.

In some embodiments of the disclosure, in response to acquiring the interaction content based on the interaction information, the method further includes: displaying an interaction control on a live stream interface of the first client, and receiving a gesture instruction of an anchor user based on the interaction control; determining operation information of the gesture instruction, and generating a display parameter of an the interaction control corresponding to the operation information; and adjusting a display effect of the interaction control based on the display parameter of the interaction control.

In some embodiments of the disclosure, generating the first interaction request based on the interaction content includes: generating the first interaction request based on the interaction content and the display parameter of the interaction control, the display parameter of the interaction control is configured to control a display effect of the operation control.

In some embodiments of the disclosure, determining the operation information of the gesture instruction includes: determining interaction operation information between the gesture instruction and the interaction control, and determining the interaction operation information as the operation information of the gesture instruction.

In some embodiments of the disclosure, determining the interaction operation information between the gesture instruction and the interaction control includes: based on the gesture instruction being selecting the interaction control and dragging the interaction control in a preset direction, acquiring dragging information; and determining the dragging information as the interaction operation information.

In some embodiments of the disclosure, the dragging information comprises a dragging duration or a dragging amplitude.

In some embodiments of the disclosure, the method further includes: receiving a first adjusting instruction on the interaction control from the anchor user; and parsing the first adjusting instruction to acquire a first adjusting parameter as the display parameter of the interaction control.

According to a second aspect of embodiments of the disclosure, a method for live stream interaction is provided. The method is applied to a second client, and includes: receiving a first interaction request sent by a first client, the first interaction request is generated by the first client in response to a voice instruction of an anchor user; parsing interaction content carried in the first interaction request; and displaying an operation control associated with the interaction content on a live stream interface of the second client.

In some embodiments of the disclosure, the method further includes: receiving an operation instruction on the operation control from an audience user of the second client; and in response to the operation instruction, generating a second interaction request based on a live stream account identifier of the second client, and feeding the second interaction request back to the first client.

In some embodiments of the disclosure, displaying the operation control associated with the interaction content on the live stream interface of the second client includes: displaying the interaction content in the operation control.

In some embodiments of the disclosure, the first interaction request carries a display parameter of an interaction control, the display parameter of the interaction control is configured to control a display effect of the operation control, displaying the operation control associated with the interaction content on the live stream interface of the second client includes: displaying the operation control based on the display parameter of the interaction control on the live stream interface of the second client.

In some embodiments of the disclosure, the method further includes: receiving a second adjusting instruction on the operation control from the audience user; and parsing the second adjusting instruction to acquire a second adjusting parameter, and adjusting the display effect of the operation control based on the second adjusting parameter.

According to a third aspect of embodiments of the disclosure, an apparatus for live stream interaction is provided. The apparatus is applied to a first client, and includes: a first receiving module, configured to receive a voice instruction of an anchor user, and parse interaction information carried in the voice instruction; an acquiring module, configured to acquire interaction content based on the interaction information; and a first generation module, configured to generate a first interaction request based on the interaction content, and send the first interaction request to a second client, the first interaction request is configured to trigger the second client to display an operation control associated with the interaction content on a live stream interface.

In some embodiments of the disclosure, the apparatus further includes: a second receiving module, configured to receive a second interaction request sent by the second client by triggering the operation control, the second interaction request including a live stream account identifier of the second client; and a first display module, configured to display the live stream account identifier and the interaction content on a live stream interface of the first client.

In some embodiments of the disclosure, the acquiring module, is configured to, based on the interaction information including an interaction instruction word, compare the interaction instruction word with a preconfigured interaction keyword; and based on the interaction instruction word matching the interaction keyword, acquire interaction content based on the interaction information.

In some embodiments of the disclosure, the acquiring module is configured to identify interaction semantics corresponding to the interaction instruction word from the interaction information by using a preconfigured semantics identification rule, and generate interaction content corresponding to the interaction semantics.

In some embodiments of the disclosure, the second display module is configured to, in response to acquiring interaction content based on the interaction information, display an interaction control on a live stream interface of the first client, and receive a gesture instruction of an anchor user based on the interaction control; a determining module is configured to determine operation information of the gesture instruction, and generate a display parameter of the interaction control corresponding to the operation information; and an adjusting module is configured to adjust a display effect of the interaction control based on the display parameter of the interaction control.

In some embodiments of the disclosure, the first generation module is configured to generate the first interaction request based on the interaction content and the display parameter of the interaction control, the display parameter of the interaction control is configured to control a display effect of the operation control.

In some embodiments of the disclosure, the determining module, is configured to determine interaction operation information between the gesture instruction and the interaction control, and determine the interaction operation information as the operation information of the gesture instruction.

In some embodiments of the disclosure, the determining module is configured to, in response to the gesture instruction being selecting the interaction control and dragging the interaction control in a preset direction, acquire dragging information, and determine the dragging information as the interaction operation information.

In some embodiments of the disclosure, the dragging information comprises a dragging duration or a dragging amplitude.

In some embodiments of the disclosure, the apparatus further includes: a third receiving module, configured to receive a first adjusting instruction on the interaction control from the anchor user; and a first parsing module, configured to parse the first adjusting instruction to acquire a first adjusting parameter as the display parameter of the interaction control.

According to a fourth aspect of embodiments of the disclosure, an apparatus for live stream interaction is provided. The apparatus is applied to a second client, and includes: a fourth receiving module, configured to receive a first interaction request sent by a first client, the first interaction request is generated by the first client in response to a voice instruction of an anchor user; a second parsing module, configured to parse interaction content carried in the first interaction request; and a display module, configured to display an operation control associated with the interaction content on a live stream interface of the second client.

In some embodiments of the disclosure, the apparatus further includes: a fifth receiving module, configured to receive an operation instruction on the operation control from an audience user of the second client; and a second generation module, configured to, in response to the operation instruction, generate a second interaction request based on a live stream account identifier of the second client, and feed the second interaction request back to the first client.

In some embodiments of the disclosure, the display module is configured to display the interaction content in the operation control.

In some embodiments of the disclosure, the first interaction request carries a display parameter of an interaction control, the display parameter of the interaction control is configured to control a display effect of the operation control, and the display module is configured to display the operation control based on the display parameter of the interaction control on the live stream interface of the second client.

In some embodiments of the disclosure, the fifth receiving module is configured to receive a second adjusting instruction on the operation control from the audience user; and the second parsing module is configured to parse the second adjusting instruction to acquire a second adjusting parameter, and adjust the display effect of the operation control based on the second adjusting parameter.

According to a fifth aspect of embodiments of the disclosure, an electronic device is provided. The electronic device includes: a processor; a memory configured to store instructions executable by a processor; the processor is configured to perform the instructions to implement the above method for live stream interaction.

According to a sixth aspect of embodiments of the disclosure, a storage medium is provided. When instructions in the storage medium are performed by a processor of an electronic device, the electronic device is caused to perform the method for live stream interaction.

According to a seventh aspect of embodiments of the disclosure, a computer program product is provided. When the computer program is performed by a processor of an electronic device, the electronic device is caused to perform the method for live stream interaction.

In the technical solution provided in embodiments of the disclosure, in response to the voice instruction of the anchor user, the interaction information carried in the voice instruction is identified directly, the interaction content described in the interaction information is acquired, and the second client is triggered to display the operation control associated with the interaction content on the live stream interface, which assists the anchor user and the audience user to perform live stream interaction directly based on the interaction content subsequently, without needing the anchor user or the audience user to manually input the interaction content, thus effectively reducing operation paths of the live stream interaction between the anchor user and the audience user, enhancing convenience of live stream interaction and efficiency of live stream interaction, and effectively enhancing the effect of live stream interaction.

It should be understood that, the above general descriptions and latter detailed descriptions are only illustrative and descriptive, and may not be a limitation of the disclosure.

### BRIEF DESCRIPTION OF THE DRAWINGS

The drawings, which are incorporated in and constitute a part of this specification, illustrate embodiments consistent with the disclosure and, together with the description, serve to explain the principles of the disclosure, but may not constitute an improper limitation of the disclosure.
FIG. 1 is a flowchart illustrating a method for live stream interaction according to an embodiment.
FIG. 2 is a schematic diagram illustrating a live stream interface according to an embodiment of the disclosure.
FIG. 3 is a schematic diagram illustrating a live stream interface according to another embodiment of the disclosure.
FIG. 4 is a flowchart illustrating a method for live stream interaction according to an embodiment.
FIG. 5 is a flowchart illustrating a method for live stream interaction according to an embodiment.
FIG. 6 is a schematic diagram illustrating a live stream interface according to another embodiment of the disclosure.
FIG. 7 is a flowchart illustrating a method for live stream interaction according to an embodiment.
FIG. 8 is a block diagram illustrating an apparatus for live stream interaction according to an embodiment.
FIG. 9 is a block diagram illustrating an apparatus for live stream interaction according to an embodiment.
FIG. 10 is a block diagram illustrating an apparatus for live stream interaction according to an embodiment.
FIG. 11 is a block diagram illustrating an apparatus for live stream interaction according to an embodiment.
FIG. 12 is a block diagram illustrating an electronic device according to an embodiment.

### DETAILED DESCRIPTION

To enable those skilled in the art to better understand the technical solutions of the disclosure, the technical solutions in embodiments of the disclosure will be described clearly and completely with reference to the drawings.

It should be noted that the terms "first", "second" and the like in the specification, the claims and the above drawings of the disclosure are used to distinguish similar objects, and are not necessarily used to describe a specific order or precedence order. It should be understood that the data used herein may be interchanged with each other where appropriate, so that the embodiments of the disclosure described herein may be implemented in a sequence other than illustrated or described herein. The implementations described in the following exemplary embodiments do not represent all implementations consistent with the disclosure.

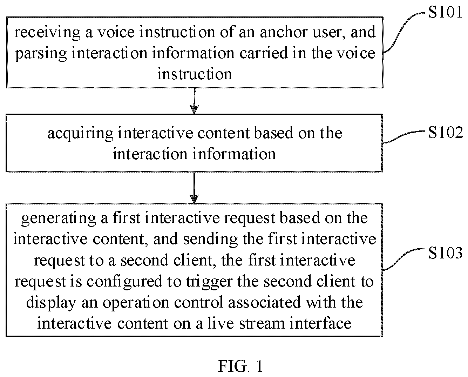

FIG. 1 is a flowchart illustrating a method for live stream interaction according to an embodiment.

The embodiment of the disclosure is described by taking the method for live stream interaction being configured in an apparatus for live stream interaction for an example.

The method for live stream interaction in the embodiment of the disclosure may be configured in an apparatus for live stream interaction, and the apparatus for live stream interaction may be configured in a server or may be configured in an electronic device, which is not limited in embodiments of the disclosure.

The embodiments of the disclosure are described by taking a method for live stream interaction being configured in an electronic device for an example. The electronic device may be a hardware device with various operating systems and imaging apparatuses, such as a mobile phone, a tablet computer, a personal digital assistant, etc.

It should be noted that, an execution body of the embodiments of the disclosure may be for example, a central processing unit (CPU) in a server or an electronic device in terms of hardware, and may be, for example, related background service in a server or an electronic device, which is not limited here.

The execution body of embodiments of the disclosure may be, specifically for example, a client of a live stream application running on an electronic device. The client, referred to as a user side, refers to a program that provides local services for a user corresponding to a server.

The execution body in the embodiment of the disclosure may be, specifically for example a client of an application at an anchor user side, and the client of the application at the anchor user side may be referred to as a first client, and correspondingly, a client of an application at an audience user side may be referred to as a second client.

As illustrated in FIG. 1, the method for live stream interaction includes the following steps:
S101, a voice instruction of an anchor user is received, and interaction information carried in the voice instruction is parsed.

An application scene of the embodiments of the disclosure is a process where a user uses a live stream application to perform video live stream, i.e., an application scene where the anchor user sends a live video stream to the second client of the audience user by using the first client, and the second client of the audience user correspondingly displays the live video stream.

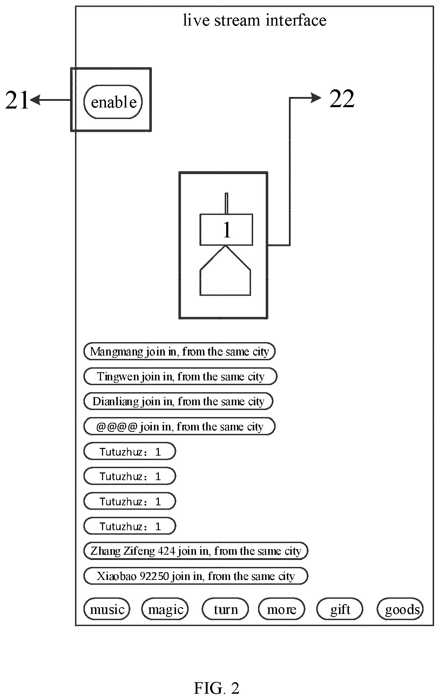

As illustrated in FIG. 2, FIG. 2 is a schematic diagram illustrating a live stream interface according to an embodiment of the disclosure. For example, FIG. 2 may specifically be a live stream interface displayed on the first client at the anchor user side, or may also be a live stream interface displayed on the second client at the audience user side, which is not limited here.

In the embodiments of the disclosure, the anchor user may initiate an interaction instruction based on a voice form in a process of oral broadcast. The interaction instruction initiated based on the voice form may be referred to as the voice instruction.

For example, in a live stream process, based on the requirement of the anchor user to interact with the audience user, the anchor user may orally broadcast a voice of "input 1". Then, the first client interacts with an audio recognition component in a first electronic device (an electronic device where the first client runs may be referred to as the first electronic device) to which the first client belongs. The audio recognition component recognizes the voice "input 1", and sends the voice "input 1" to a processor in the first electronic device. The processor parses the voice "input 1"to generate a corresponding voice instruction, and transmits the voice instruction to the first client, so that the first client may receive the voice instruction of the anchor user and parse the interaction information carried in the voice instruction.

It should be noted that, semantics content included in the voice instruction may be called as the interaction information. For example, when the voice instruction is a voice "input 1", the semantics "input 1" may be referred to as the interaction information. Of course, the voice instruction may be also referred to as "give applause", in this case, the semantics "give applause" may be also referred to as the interaction information, which is not limited here.

In the embodiments of the disclosure, when a first client receives the voice instruction of the anchor user, the first client parses the interaction information carried in the voice instruction, so as to determine an interaction intention of the anchor user based on the specific content of the interaction information. Details may be as following.

In the embodiments of the disclosure, an on-off switch for voice interaction may be configured on the live stream interface. As illustrated in an icon 21 in the above mentioned FIG. 2, when the anchor user enables the icon 21, the anchor user may trigger the first client to monitor whether the voice instruction of the anchor user is received, so that the interaction information carried in the voice instruction is parsed in response to the voice instruction of the anchor user when it is monitored that the voice instruction of the anchor user is received.

S 102, interaction content is acquired based on the interaction information.

The first client may acquire the interaction content based on the interaction information in response to receiving the voice instruction of the anchor user and parsing the interaction information carried in the voice instruction.

The interaction content in the disclosure is configured to represent an interaction intention of the anchor user for current live stream interaction. For example, when the voice instruction is the voice "input 1", it represents that the anchor user wants the audience user to input 1, "1" may be interpreted as the interaction content. When the voice instruction is "give applause", it represents that the anchor user wants the audience user to give applause, an emoticon icon (for example, a palm icon) corresponding to "give applause" may be interpreted as the interaction content, which is not limited here.

When the first client acquires the interaction content based on the interaction information, the interaction content is specifically acquired based on a preconfigured rule. The preconfigured rule may be preconfigured by a factory program of the first client, or may be customized, which is not limited here.

In the embodiments of the disclosure, a semantics text corresponding to the interaction information may be recognized. Based on an interaction instruction word included in the interaction information, the interaction instruction word is compared with a preconfigured interaction keyword. Based on the interaction instruction word matching the interaction keyword, the interaction content is acquired based on the interaction information. Thus, the interaction intention of the anchor user for the live stream interaction can be accurately recognized, which assists the audience side user to directly respond to the interaction content corresponding to the interaction intention subsequently, without needing the anchor user or the audience user to manually input the interaction content, enhancing convenience of live stream interaction and effect of live stream interaction.

For example, when the voice instruction is the voice "input 1", it represents that the anchor user wants the audience user to input 1, "1" may be interpreted as the interaction content and "input" may be interpreted as an interaction instruction word. First, a semantics text: input 1 corresponding to the voice instruction "input 1" is identified. Word segmentation is performed on the semantics text: input 1, to identify the contained interaction instruction word "input". The interaction instruction word "input" is compared with the preconfigured interaction keyword to determine whether a plurality of preconfigured interaction keywords include "input". In a case of including "input", it is determined that the interaction instruction word "input" matches the interaction keyword "input", and the interaction content is acquired based on the interaction information, that is, the interaction content "1" included in "input 1" is acquired.

The preconfigured interaction keyword may be one word or one sentence. The preconfigured interaction keyword may be preconfigured by an anchor user, and it is supported that the preconfigured interaction keyword is adaptively adjusted after configuration, which is not limited here.

In some embodiments, when the interaction content is acquired based on the interaction information, a preconfigured semantics identification rule may be configured to identify interaction semantics corresponding to the interaction instruction word from the interaction information, and the interaction content corresponding to the interaction semantics is generated. Thus, the human-computer interaction efficiency between the anchor user and the first client may be effectively enhanced. In addition, the interaction content is identified and obtained based on the preconfigured semantics identification rule, so as to assist the first client to accurately and rapidly identify the interaction intention of the anchor user for the live stream interaction, and to accurately and rapidly identify the interaction content preferred by the anchor user.

The preconfigured semantics identification rule may be preconfigured by the anchor user, and or may also be adaptively adjusted after configuration, which is not limited here.

For example, when the voice instruction is "input 1", it represents that the anchor user wants the audience user to input 1, "input "may be interpreted as the interaction instruction word. The preconfigured semantics identification rule is to determine a semantics text after the interaction instruction word as the interaction semantics. In this case, "1" may be directly taken as the interaction semantics, and the corresponding interaction content "1" is generated based on the interaction semantics "1".

For example, when the voice instruction is "give applause", it represents that the anchor user wants the audience user to give applause, "give" may be interpreted as the interaction instruction word. The preconfigured semantics identification rule is to take an emoticon icon (for example, a palm emoticon icon) corresponding to the semantics text after the interaction instruction word ("give") as the interaction semantics. In this case, the palm emoticon icon may be directly taken as the corresponding interaction content, which is not limited here.

S 103, a first interaction request is generated based on the interaction content, and the first interaction request is sent to the second client, the first interaction request is configured to trigger the second client to display an operation control associated with the interaction content on a live stream interface.

After the interaction content is generated based on the interaction information, the step of generating the first interaction request based on the interaction content and sending the first interaction request to the second client is executed. The first interaction request is configured to trigger the second client to display the operation control associated with the interaction content on the live stream interface. The operation control may assist the anchor user and the audience user to perform live stream interaction directly based on the interaction content subsequently.

That is, the first interaction request is generated based on the interaction content, so that the interaction content is carried in the first interaction request. The first interaction request is sent to the second client, so that the second client may confirm the interaction content carried in the first interaction request in response to the first interaction request.

In some other embodiments, after the first interaction request is generated based on the interaction content and the first interaction request is sent to the second client, the method for live stream interaction further includes: receiving a second interaction request sent by the second client by triggering the operation control, the second interaction request including a live stream account identifier of a second client; and displaying a live stream account identifier and interaction content on a live stream interface of the first client, so that it facilitates the anchor user to learn about the actual interaction situation with the audience user in real time.

After the first interaction request is generated based on the interaction content and the first interaction request is sent to the second client, the first client may monitor whether the second interaction request of the second client is received, and in response to monitoring that the second interaction request of the second client is received, it represents that the audience user of the second client triggers the operation control and confirms the interaction content, and the audience user has the willingness to interact with the anchor user based on the interaction content. In this case, the first client may parse to obtain the live stream account identifier of the second client in the second interaction request.

The live stream account identifier may be uniquely identify a live stream account configured for the audience user on the second client.

In response to monitoring that the second interaction request of the second client is received, it represents that the audience user of the second client triggers the operation control and confirms the interaction content. After the live stream account identifier of the second client in the second interaction request is obtained by parsing, the live stream account identifier and the interaction content may be correspondingly displayed on the live stream interface of the first client, so that it shows to the anchor user that the audience user corresponding to the live stream account identifier has confirmed the interaction content.

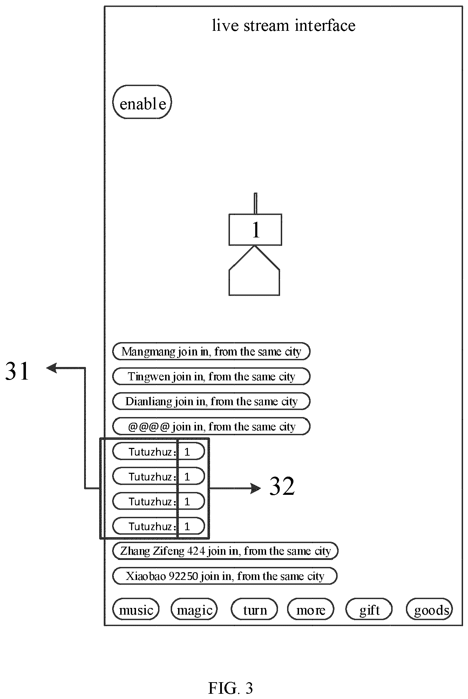

FIG. 3 is a schematic diagram of a live stream interface according to another embodiment of the disclosure. For example, FIG. 3 may be a live stream interface displayed on the first client at the anchor user side. FIG. 3 shows a schematic diagram illustrating an effect of correspondingly displaying the live stream account identifier and the interaction content on the live stream interface, and includes the live stream account identifier 31 and the corresponding interaction content 32.

In an embodiment of the disclosure, in response to the voice instruction of the anchor user, the interaction information carried in the voice instruction is identified directly, the interaction content described in the interaction information is acquired, and the second client is triggered to display the operation control associated with the interaction content on the live stream interface, which assists the anchor user and the audience user to perform live stream interaction directly based on the interaction content subsequently, without needing the anchor user or the audience user to manually input the interaction content, thus effectively reducing operation paths of the live stream interaction between the anchor user and the audience user, enhancing convenience of live stream interaction and efficiency of live stream interaction, and effectively enhancing the effect of live stream interaction.

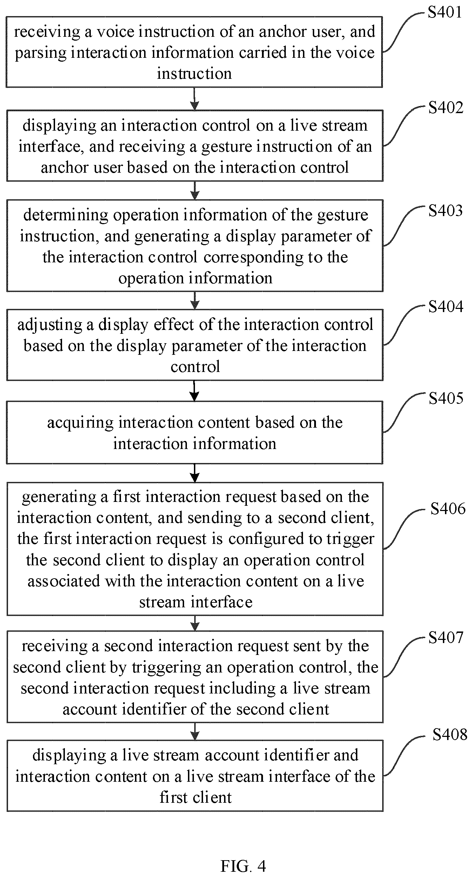

FIG. 4 is a flowchart illustrating a method for live stream interaction according to another embodiment.

For example, the execution body of the embodiment of the disclosure may be a first client of an application at an anchor user side.

As illustrated in FIG. 4, the method for live stream interaction includes the following steps.

S401, a voice instruction of an anchor user is received, and interaction information carried in the voice instruction is parsed.

Detailed description of S401 may refer to the above mentioned embodiments, which will not be repeated here.

S402, an interaction control is displayed on a live stream interface, and a gesture instruction of an anchor user is received based on the interaction control.

That is, the first client may display the interaction control on the live stream interface, and monitor whether the anchor user triggers the interaction control. The gesture instruction of the anchor user is received based on the interaction control. For example, the gesture instruction may be that the anchor user touches the interaction control displayed on the live stream interface with a finger, and drags the interaction control to slide a preset distance. Certainly, the gesture instruction may be in any other form.

In an embodiment of the disclosure, a display duration of the interaction content may be adjusted based on the gesture instruction of the anchor user, or a display duration of interaction content of the second client may be adjusted based on the gesture instruction, which is not limited here.

S403, operation information of the gesture instruction is determined, and a display parameter of the interaction control corresponding to the operation information is generated.

In an embodiment of the disclosure, the interaction control may be displayed on the live stream interface, and the gesture instruction is received based on the interaction control. Interaction operation information between the gesture instruction and the interaction control is determined, and the interaction operation information is determined as the operation information of the gesture instruction, so as to enhance the convenience of interaction between the user and the client and the effect of interaction between the user and the client.

In some other embodiments, when the interaction control is displayed on the live stream interface, a first adjusting instruction on the interaction control of the anchor user may be received, and the first adjusting instruction may be parsed to acquire a first adjusting parameter as the display parameter of the interaction control. The display parameter of the interaction control is configured to control a display effect of the operation control.

For example, the display effect may be a display position, zooming out when the interaction control is moved to a boundary of the live stream interface, or displaying the interaction control in a semitransparent adsorption effect, which is not limited here.

For example, the first adjusting instruction instructs the anchor user to drag the interaction control to the boundary of the live stream interface, in this case, it is determined that the first adjusting parameter corresponding to the first adjusting instruction is to reduce the size of the interaction control to a preset value, and a display size of the interaction control displayed is adjusted based on the preset value.

That is, in the embodiment of the disclosure, it further supports that the anchor user adaptively adjusts the display effect of the interaction control, so that the display of the interaction control may conform to a custom configuration of the anchor user, thus enhancing the live stream interaction effect based on a perspective of visual interaction.

In some embodiments, the step of determining the interaction operation information of the gesture instruction and the interaction control in response to the gesture instruction includes: based on the gesture instruction being selecting the interaction control and dragging the interaction control in a preset direction, acquiring dragging information; and determining the dragging information as the interaction operation information, which may accurately identify the interaction operation information of a live stream user, effectively avoid information false identification caused due to a false touch of the live stream user on the live stream interface, so that a processing logic of the live stream interaction is more suitable for the actual usage scenario of the user.

The dragging information is a dragging duration or a dragging amplitude, or may be any other possible dragging information, so that the method for acquiring the interaction operation information is convenient and practical, which enhances the interaction operation effect of the anchor user.

For example, as illustrated in the above mentioned FIG. 2, FIG. 2 illustrates an interaction control 22 (the identified interaction content may be configured to be displayed in the interaction control 22). In this case, a gesture instruction of the anchor user is received. The interaction operation information between the anchor user's gesture and the interaction control 22 is determined, and a corresponding gesture instruction is generated based on the interaction operation information. For example, the live stream user clicks the interaction control 22 with a finger and stays on the interaction control 22 for a few seconds, or, the live stream user clicks the interaction control 22 by a finger and drags the interaction control 22 to move some distance. In this case, a corresponding gesture instruction may be generated based on the interaction operation information (stay for a few seconds or move some distance). Or, an up-down slide button may be configured in the interaction control 22, so that a situation of operating the up-down slide button by the anchor user is identified, and the situation of operating the up-down slide button is taken as the interaction operation information of the gesture of the live stream user and the interaction control 22, which is not limited here.

S404, a display effect of the interaction control is adjusted based on the display parameter of the interaction control.

When the operation information is identified, the display parameter of the interaction control corresponding to the operation information may be generated based on a preconfigured rule. The display parameter may be configured to adjust a display duration of an interaction control at the first client side, or may be configured to adjust a display duration of an operation control at the second client side, which is not limited here.

In an embodiment of the disclosure, the display content (for example, a display duration, a display size, etc.) of the operation control at the second client side is adjusted by using the display parameter of the interaction control corresponding to operation information. That is, in the embodiment of the disclosure, the display content of the operation control of the second client is correspondingly controlled based on the interaction operation information on the interaction control of the anchor user, thus making the live stream interaction more flexible, expanding functions of the live stream interaction, and further enhancing the live stream interaction efficiency.

For example, in response to the operation information being that the live stream user drags the interaction control 22 to move 1 cm and a preconfigured rule being that a display duration corresponding to 1 cm is 10s, the display duration being 10s may be referred to as the display parameter of the interaction control, or may be configured to other forms, which is not limited here.

Subsequently, a first interaction request may be generated based on both the acquired interaction content and the display parameter of the interaction control, and the first interaction request is sent to the second client. The operation control is displayed on the live stream interface of the second client based on the display parameter of the interaction control, which may refer to subsequent embodiments.

S405, interaction content is acquired based on the interaction information.

S406, a first interaction request is generated based on the interaction content, and the first interaction request is sent to the second client, the first interaction request is configured to trigger the second client to display an operation control associated with the interaction content on a live stream interface.

S407, a second interaction request sent by the second client by triggering an operation control is received, the second interaction request including a live stream account identifier of the second client.

S408, the live stream account identifier and the interaction content are displayed on a live stream interface of the first client.

The description of S405 to S408 may refer to the above mentioned embodiments, which will not be repeated here.

It may be understood that, the execution sequence of each step in the above embodiments is only an example of the process, and some steps such as S402-S404 may be optionally performed. The execution sequence of the steps and the execution of the steps are not specifically limited in embodiments of the disclosure.

In an embodiment of the disclosure, in response to the voice instruction of the anchor user, the interaction information carried in the voice instruction is identified directly, the interaction content described in the interaction information is acquired, and the second client is triggered to display the operation control associated with the interaction content on the live stream interface, which assists the anchor user and the audience user to perform live stream interaction directly based on the interaction content subsequently, without needing the anchor user or the audience user to manually input the interaction content, thus effectively reducing operation paths of live stream interaction between the anchor user and the audience user, enhancing convenience of live stream interaction and efficiency of live stream interaction, and effectively enhancing the effect of live stream interaction. By displaying the interaction control on the live stream interface, receiving the gesture instruction of the anchor user based on the interaction control, determining the operation information of the gesture instruction, generating the display parameter of the interaction control corresponding to the operation information, and adjusting the display effect of the interaction control based on the display parameter of the interaction control, it supports an adaptive adjustment of the anchor user on the display effect of the interaction control, so that the display of the interaction control may be suitable for a custom configuration of the anchor user, thus enhancing the effect of the live stream interaction based on a perspective of visual interaction. By generating the first interaction request based on the interaction content and the display parameter of the interaction control, the display parameter of the interaction control being configured to control the display effect of the operation control, it supports correspondingly controlling the display content of the operation control at the second client side based on the interaction operation information of the anchor user on the interaction control, thus making the live stream interaction more flexible, expanding the functions of live stream interaction, and further enhancing the efficiency of the live stream interaction.

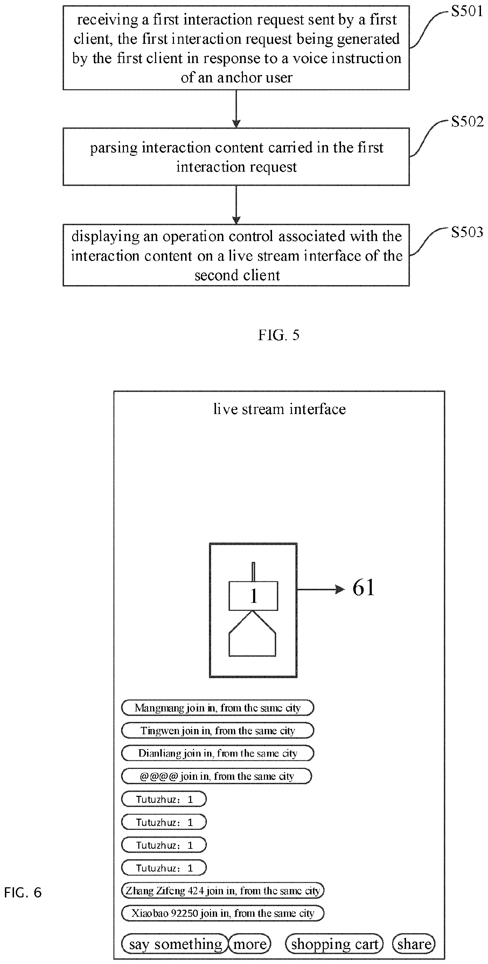

FIG. 5 is a flowchart illustrating a method for live stream interaction according to another embodiment.

For example, the execution body of the embodiment of the disclosure may be a client of an application at an audience user side, and the client of the application at the audience user side may be referred to as a second client.

As illustrated in FIG. 5, the method for live stream interaction includes the following steps:
S501, a first interaction request sent by a first client is received, and the first interaction request is generated by the first client in response to a voice instruction of an anchor user.
S502, interaction content carried in the first interaction request is parsed.
S503, an operation control associated with the interaction content is displayed on a live stream interface of the second client.

In some embodiments, displaying the interaction content on the live stream interface of the second client may be as follows. The operation control associated with the interaction content is displayed on the live stream interface of the second client, and the interaction content is displayed in the operation control. Thus the presentation effect of the interaction content is enhanced, which not only supports the presentation of the interaction content, but also supports triggering a corresponding interaction function in response to an operation instruction of the audience user on the operation control corresponding to the interaction content, so that the presentation effect of the interaction function is intuitive and stereoscopic.

In some embodiments of the disclosure, the first interaction request further carries a display parameter of an interaction control. The display parameter of the interaction control is configured to control a display effect of the operation control. Displaying the operation control on the live stream interface of the second client includes: displaying the operation control based on the display parameter of the interaction control on the live stream interface of the second client. Thus, it makes the live stream interaction flexible, expanding the live stream interaction function, and further enhancing the efficiency of the live stream interaction.

As illustrated in FIG. 6, FIG. 6 is a schematic diagram of a live stream interface according to another embodiment of the disclosure. For example, FIG. 6 may be a live stream interface displayed on the second client at the audience user side. An operation control 61 is shown in FIG. 6, and the interaction content "1" orally broadcast by the anchor user in the above embodiments is shown in the operation control 61.

For example, in the above embodiments, in a case that the operation information is that a live stream user drags the interaction control 22 to move 1 cm and a preconfigured rule is that a display duration corresponding to 1 cm is 10s, the display duration being 10s may be referred to as a display parameter of the interaction control, or the display parameter of the interaction control may be configured as others. In the embodiment of the disclosure, displaying the operation control based on the display parameter of the interaction control on the live stream interface of the second client may be referred to as controlling the operation control 61 to display for 10s on the live stream interface of the second client.

In some embodiments, the method for live stream interaction further includes: receiving a second adjusting instruction on the operation control from the audience user, and parsing the second adjusting instruction to acquire a second adjusting parameter, and adjusting a display effect of the operation control based on the second adjusting parameter, thus enriching the application function of the method for live stream interaction, supporting not only displaying an operation control based on the display parameter of the interaction control of the anchor user but also making a corresponding adjustment on the operation control based on the usage requirement of the audience user, with a good application effect, and balancing the usage requirements of both the anchor user and the audience user, so that the display of the operation control may be suitable for the custom configuration of the audience user, thus enhancing the effect of the live stream interaction based on the perspective of visual interaction.

For example, the display effect may be a display position, zooming out when the operation control is moved to a boundary of the live stream interface, or displaying the operation control in a semitransparent adsorption effect, which is not limited here.

For example, the second adjusting instruction instructs the audience user to drag the operation control to the boundary of the live stream interface, in this case, it is determined that the second adjusting parameter corresponding to the second adjusting instruction is to reduce the size of the operation control to a preset value, and a display size of the operation control displayed is adjusted based on the preset value.

In some other embodiments, the method for live stream interaction further includes following. An operation instruction on the operation control of an audience user of the second client is received. In response to the operation instruction, a second interaction request is generated based on a live stream account identifier of the second client, and the second interaction request is fed back to the first client, so that the audience user may directly respond to interaction content orally broadcast by the anchor user, which effectively enhances the convenience of the interaction comment operation. Thus, in response to a comment instruction, the second interaction request is generated based on the live stream account identifier of the second client, and the second interaction request is fed back to the first client.

Referring to FIG. 6, an operation control 61 is illustrated in FIG. 6, and the interaction content "1" orally broadcast by the anchor user in the above embodiments is displayed in the operation control 61. In this case, it may be monitored, based on the operation control 61, whether the operation instruction on the operation control of the audience user of the second client is received. The operation instruction may specifically be a confirmation instruction for the interaction content "1", so that when the operation instruction for the operation control of the audience user of the second client is received, the second interaction request is generated based on the live stream account identifier of the second client in response to the operation instruction, and the second interaction request is fed back to the first client.

In an embodiment of the disclosure, by receiving the first interaction request sent by the first client, the first interaction request being generated by the first client in response to the voice instruction of the anchor user, parsing the interaction content carried in the first interaction request, and displaying the operation control associated with the interaction content on the live stream interface of the second client, the anchor user and the audience user can perform live stream interaction directly based on the interaction content without needing the anchor user or the audience user to manually input the interaction content, thus effectively reducing operation paths of the live stream interaction between the anchor user and the audience user, enhancing convenience of live stream interaction and efficiency of live stream interaction and effectively enhancing the effect of live stream interaction.

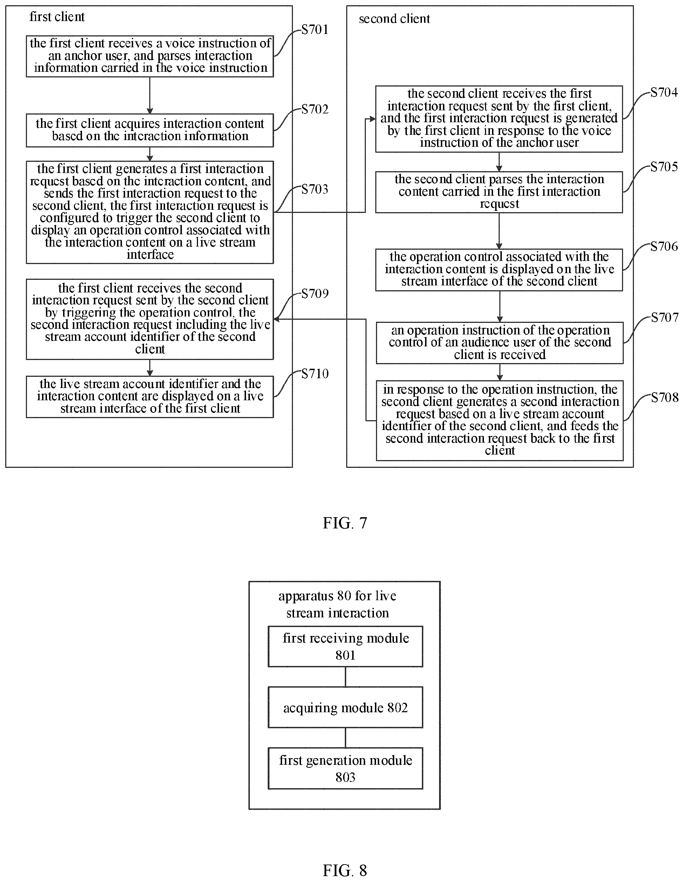

FIG. 7 is a flowchart illustrating a method for live stream interaction according to another embodiment.

The embodiment of the disclosure illustrates interaction processing logic between a first client and a second client.

As illustrated in FIG. 7, the method for live stream interaction includes the following steps.

S701, the first client receives a voice instruction of an anchor user and parses interaction information carried in the voice instruction.

S702, the first client acquires interaction content based on the interaction information.

S703, the first client generates a first interaction request based on the interaction content, and sends the first interaction request to the second client, the first interaction request is configured to trigger the second client to display an operation control associated with the interaction content on a live stream interface.

S704, the second client receives the first interaction request sent by the first client, and the first interaction request is generated by the first client in response to the voice instruction of the anchor user.

S705, the second client parses the interaction content carried in the first interaction request.

S706, the operation control associated with the interaction content is displayed on the live stream interface of the second client.

S707, an operation instruction of the operation control of the audience user of the second client is received.

S708, in response to the operation instruction, the second client generates a second interaction request based on a live stream account identifier of the second client, and feeds the second interaction request back to the first client.

S709, the first client receives the second interaction request sent by the second client by triggering the operation control, the second interaction request including the live stream account identifier of the second client.

S710, the live stream account identifier and the interaction content are displayed on a live stream interface of the first client.

The detailed explanation and technical effects of the steps in the embodiments of FIG. 7 may refer to the above mentioned embodiments as illustrated in FIGS. 1-6, which will not be repeated here.

FIG. 8 is a block diagram illustrating an apparatus for live stream interaction according to an embodiment.

As illustrated in FIG. 8, the apparatus 80 for live stream interaction includes a first receiving module 801, an acquiring module 802, and a first generation module 803. The apparatus 80 for live stream interaction is applied to a first client.

The first receiving module 801 is configured to receive a voice instruction of an anchor user, and parse interaction information carried in the voice instruction.

The acquiring module 802 is configured to acquire interaction content based on the interaction information.

The first generation module 803 is configured to generate a first interaction request based on the interaction content, and send the first interaction request to a second client, the first interaction request is configured to trigger the second client to display an operation control associated with the interaction content on a live stream interface.

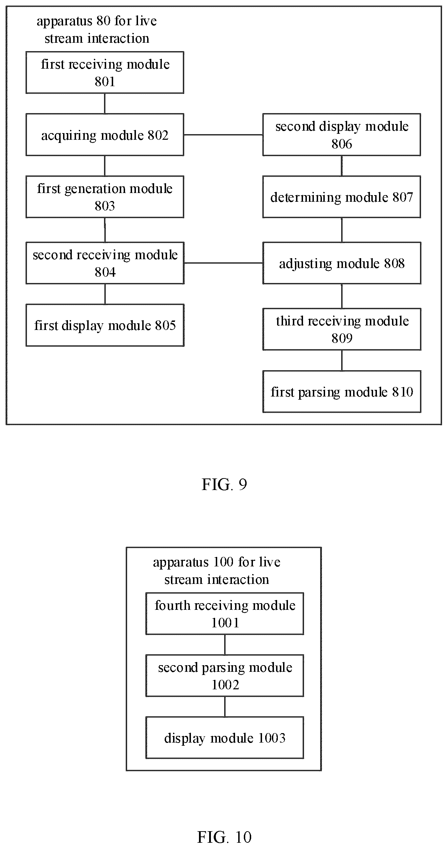

In some embodiments of the disclosure, as illustrated in FIG. 9, the apparatus 80 for live stream interaction further includes a second receiving module 804 and a first display module 805.

The second receiving module 804 is configured to receive a second interaction request sent by the second client by triggering the operation control, the second interaction request including a live stream account identifier of the second client.

The first display module 805 is configured to display the live stream account identifier and the interaction content on a live stream interface of the first client.

In some embodiments of the disclosure, the acquiring module 802 is configured to, based on the interaction information including an interaction instruction word, compare the interaction instruction word with a preconfigured interaction keyword; and based on the interaction instruction word matching the interaction keyword, acquire the interaction content based on the interaction information.

In some embodiments of the disclosure, the acquiring module 802 is configured to identify interaction semantics corresponding to the interaction instruction word from the interaction information by using a preconfigured semantics identification rule, and generate the interaction content corresponding to the interaction semantics.

In some embodiments of the disclosure, as illustrated in FIG. 9, the apparatus 80 for live stream interaction further includes a second display module 806, a determining module 807 and an adjusting module 808.

The second display module 806 is configured to, in response to acquiring the interaction content based on the interaction information, display an interaction control on a live stream interface, and receive a gesture instruction of an anchor user based on the interaction control.

The determining module 807 is configured to determine operation information of the gesture instruction, and generate a display parameter of the interaction control corresponding to the operation information.

The adjusting module 808 is configured to adjust a display effect of the interaction control based on the display parameter of the interaction control.

In some embodiments of the disclosure, the first generation module 803 is configured to generate the first interaction request based on the interaction content and the display parameter of the interaction control, the display parameter of the interaction control is configured to control a display effect of the operation control.

In some embodiments of the disclosure, the determining module 807 is configured to determine interaction operation information between the gesture instruction and the interaction control, and determine the interaction operation information as the operation information of the gesture instruction.

In some embodiments of the disclosure, the determining module 807 is configured to, in response to the gesture instruction being selecting the interaction control and dragging the interaction control in a preset direction, acquire dragging information, and determine the dragging information as the interaction operation information.

In some embodiments of the disclosure, the dragging information is a dragging duration or a dragging amplitude.

In some embodiments of the disclosure, as illustrated in FIG. 9, the apparatus 80 for live stream interaction further includes a third receiving module 809 and a first parsing module 810.

The third receiving module 809 is configured to receive a first adjusting instruction on the interaction control from the anchor user.

The first parsing module 810 is configured to parse the first adjusting instruction to acquire a first adjusting parameter as the display parameter of the interaction control.

With regard to the apparatus for live stream interaction in the embodiments, the specific for performing operations for individual have been described in detail in the embodiments regarding the method for live stream interaction and will not be elaborated here.

In the embodiment of the disclosure, in response to the voice instruction of the anchor user, the interaction information carried in the voice instruction is identified directly, the interaction content described in the interaction information is acquired, and the second client is triggered to display the operation control associated with the interaction content on the live stream interface, which assists the anchor user and the audience user to perform live stream interaction directly based on the interaction content subsequently, without needing the anchor user or the audience user to manually input the interaction content, thus effectively reducing operation paths of the live stream interaction between the anchor user and the audience user, enhancing convenience of live stream interaction and efficiency of live stream interaction, and effectively enhancing the effect of live stream interaction.

FIG. 10 is a block diagram illustrating an apparatus for live stream interaction according to another embodiment. The apparatus for live stream interaction is applied to a second client.

As illustrated in FIG. 10, the apparatus 100 for live stream interaction includes a fourth receiving module 1001, a second parsing module 1002, and a display module 1003.

The fourth receiving module 1001 is configured to receive a first interaction request sent by a first client, the first interaction request is generated by the first client in response to a voice instruction of an anchor user.

The second parsing module 1002 is configured to parse interaction content carried in the first interaction request.

The display module 1003 is configured to display an operation control associated with the interaction content on a live stream interface of the second client.

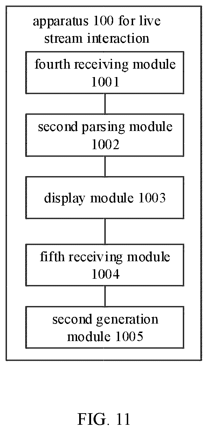

In some embodiments of the disclosure, as illustrated in FIG. 11, the apparatus 100 for live stream interaction further includes a fifth receiving module 1004 and a second generation module 1005.

The fifth receiving module 1004 is configured to receive an operation instruction on the operation control from an audience user of the second client.

The second generation module 1005 is configured to, in response to the operation instruction, generate a second interaction request based on a live stream account identifier of the second client, and feed the second interaction request back to the first client.

In some embodiments of the disclosure, the display module 1003 is configured to display the interaction content in the operation control.

In some embodiments of the disclosure, the first interaction request further carries a display parameter of an interaction control, the display parameter of the interaction control is configured to control a display effect of the operation control. The display module 1003 is configured to display the operation control based on the display parameter of the interaction control on the live stream interface of the second client.

In some embodiments of the disclosure, the fifth receiving module 1004, is configured to receive a second adjusting instruction on the operation control from the audience user; and the second parsing module 1002, is configured to parse the second adjusting instruction to acquire a second adjusting parameter, and adjust the display effect of the operation control based on the second adjusting parameter.

With regard to the apparatus for live stream interaction in the embodiments, the specific way for performing operations for individual have been described in detail in the embodiments of the method for live stream interaction and will not be elaborated here.

In the embodiment of the disclosure, by receiving the first interaction request sent by the first client, the first interaction request being generated by the first client in response to the voice instruction of the anchor user, parsing the interaction content carried in the first interaction request, and displaying the operation control associated with the interaction content on the live stream interface of the second client, the anchor user and the audience user can perform live stream interaction directly based on the interaction content without needing the anchor user or the audience user to manually input the interaction content, thus effectively reducing operation paths of the live stream interaction between the anchor user and the audience user, enhancing convenience of live stream interaction and efficiency of live stream interaction and effectively enhancing the effect of live stream interaction.

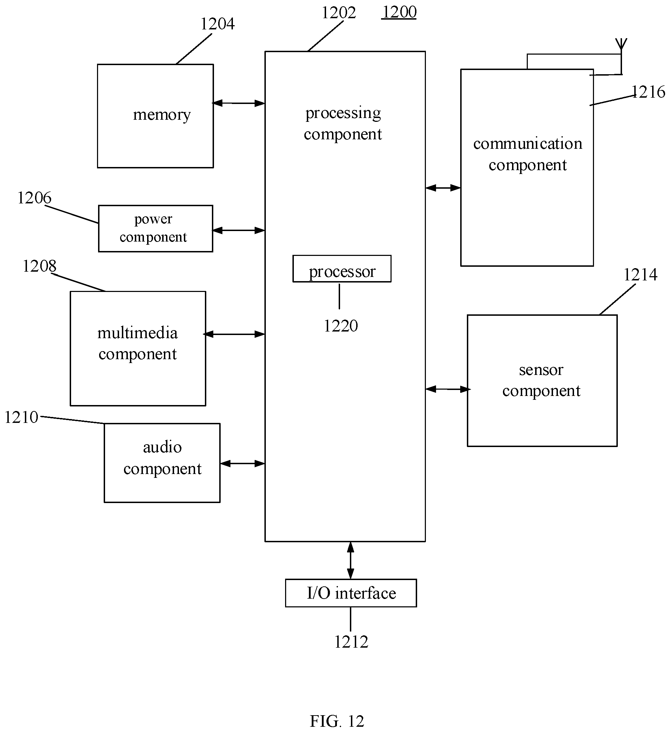

The embodiment of the disclosure further provides an electronic device, and FIG. 12 is a block diagram illustrating an electronic device according to an embodiment. For example, the electronic device 1200 may be a mobile phone, a computer, a digital broadcast terminal, a messaging device, a gaming console, a tablet, a medical device, exercise equipment, a personal digital assistant, and the like.

As illustrated in FIG. 12, the electronic device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operation of the device 1200, such as the operations related to display, phone calls, data communication, camera operations and recording operations. The processing component 1202 may include one or more processors 1220 to perform instructions, to complete all or part of steps of the above method for live stream interaction. In addition, the processing component 1202 may include one or more modules which facilitate the interaction between the processing component 1202 and other components. For example, the processing component 1202 may include a multimedia module to facilitate the interaction between the multimedia component 1208 and the processing component 1202.

The memory 1204 is configured to store various types of data to support the operation of the electronic device 1200. Examples of such data include the instructions for any applications or methods operated on the electronic device 1200, contact data, phone book data, messages, pictures, videos, etc. The memory 1204 may be implemented by using any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1206 may provide power supply to various components of the electronic device 1200. The power component 1206 may include a power management system, one or more power sources, and other components associated with the generation, management, and distribution of power in the electronic device 1200.

The multimedia component 1208 includes a touch screen providing an output interface between the electronic device 1200 and the user. In some embodiments, the touch screen may include a liquid crystal display (LCD) and a touch panel (TP). The touch panel includes one or more touch sensors to sense touches, swipes, and gestures on the touch panel. The touch sensor may not only sense a boundary of a touch or slide action, but also detect a time duration and a pressure associated with the touch or slide action. In some embodiments, the multimedia component 1208 includes a front camera and/or a rear camera. When the electronic device 1200 is in an operation mode, such as a photographing mode or a video mode, the front camera and/or the rear camera may receive the external multimedia data. Each of the front camera and the rear camera may be a fixed optical lens system or have focus and optical zoom capability.

The audio component 1210 is configured to output and/or input audio signals. For example, the audio component 1210 includes a microphone (MIC). When the electronic device 1200 is in an operation mode, such as a call mode, a recording mode, and a speech recognition mode, the microphone is configured to receive the external audio signals. The received audio signal may be further stored in the memory 1204 or transmitted via the communication component 1216.

In some embodiments, the audio component 1210 further includes a speaker configured to output an audio signal.

The I/O interface 1212 provides an interface for the processing component 1202 and the peripheral interface modules, and the peripheral interface modules may be a keyboard, a click wheel, a button, etc. The buttons may include but are not limited to a home button, a volume button, a start button and a lock button.

The sensor component 1214 includes one or more sensors, configured to provide various aspects of status assessment for the electronic device 1200. For example, the sensor component 1214 may detect the on/off state of the electronic device 1200, and the relative positioning of the component, e.g., the display and the keypad, of the electronic device 1200. The sensor component 1214 may further detect a change in position of the electronic device 1200 or a component of the electronic device 1200, the presence or absence of contact between the user and the electronic device 1200, the orientation or acceleration/deceleration of the electronic device 1200, and a change in the temperature of the electronic device 1200. The sensor component 1214 may include a proximity sensor configured to detect the existence of the objects nearby without any physical contact. The sensor component 1214 may further include a light sensor such as CMOS or CCD image sensor, which is configured to use in imaging applications. In some embodiments, the sensor component 1214 may further include an acceleration transducer, a gyroscope sensor, a magnetic sensor, a pressure sensor or a temperature sensor.

The communication component 1216 is configured to facilitate communication, wired or wirelessly, between the electronic device 1200 and other devices. The electronic device 1200 may access a wireless network based on a communication standard, such as WiFi, 2G, 3G, or their combination. In an illustrative embodiment, the communication component 1216 receives broadcast signals or broadcast-related information from an external broadcast management system via a broadcast channel. In an illustrative embodiment, the communication component 1216 further includes a near field communication (NFC) module to facilitate short-range communication. For example, the NFC module may be implemented based on a radio frequency identification (RFID) technology, an infrared data association (IrDA) technology, an ultra-wideband (UWB) technology, a bluetooth (BT) technology, and other technologies.

In an illustrative embodiment, the electronic device 1200 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method for live stream interaction.

In an illustrative embodiment, there is also provided a non-transitory computer readable storage medium including instructions, such as the memory 1204 including instructions. The instructions may be executed by the processor 1220 of the electronic device 1200 to implement the above method for live stream interaction. For example, the non-transitory computer readable storage medium may be a ROM, a random access memory (RAM), a CD-ROM, a magnetic tape, a floppy disk, an optical data storage device, etc.

A non-transitory computer readable storage medium is provided, when instructions in the non-transitory computer readable storage medium are performed by a processor of the electronic device 1200, the electronic device 1200 is caused to perform the above method for live stream interaction.

All embodiments of the disclosure may be performed separately or in combination with other embodiments, which are within the protection scope of the disclosure.

Other implementations of the disclosure will readily occur to those skilled in the art upon consideration of the specification and practice of the disclosure disclosed herein. This disclosure is intended to cover any variations, uses, or adaptations of this disclosure that follow the general principles of this disclosure and include common general knowledge or conventional technical means in the technical field not disclosed by this disclosure. The specification and embodiments are to be regarded as illustrative only, with the true scope and spirit of the disclosure being indicated by the following claims.

It should be understood that the present disclosure is not limited to the precise structures described above and shown in the accompanying drawings, and that various modifications and changes may be made without departing from its scope. The scope of the present disclosure is only limited by the appended claims.

## Claims

1. A method for live stream interaction, applied to a first client, comprising:
receiving a voice instruction of an anchor user, and parsing interaction information carried in the voice instruction;
acquiring interaction content based on the interaction information; and
generating a first interaction request based on the interaction content, and sending the first interaction request to a second client, wherein the first interaction request is configured to trigger the second client to display an operation control associated with the interaction content on a live stream interface.

2. The method of claim 1, further comprising:
receiving a second interaction request sent by the second client by triggering the operation control, the second interaction request comprising a live stream account identifier of the second client; and
displaying the live stream account identifier and the interaction content on a live stream interface of the first client.

3. The method of claim 1, wherein said acquiring interaction content based on the interaction information comprises:
based on the interaction information comprising an interaction instruction word, comparing the interaction instruction word with a preconfigured interaction keyword; and
based on the interaction instruction word matching the interaction keyword, acquiring the interaction content based on the interaction information.

4. The method of claim 3, wherein said acquiring interaction content based on the interaction information comprises:
identifying interaction semantics corresponding to the interaction instruction word from the interaction information by using a preconfigured semantics identification rule; and
generating the interaction content corresponding to the interaction semantics.

5. The method of claim 1, wherein, in response to acquiring the interaction content based on the interaction information, the method further comprises:
displaying an interaction control on a live stream interface of the first client, and receiving a gesture instruction of an anchor user based on the interaction control;
determining operation information of the gesture instruction, and generating a display parameter of the interaction control corresponding to the operation information; and
adjusting a display effect of the interaction control based on the display parameter of the interaction control.

6. The method of claim 5, wherein said generating a first interaction request based on the interaction content comprises:
generating the first interaction request based on the interaction content and the display parameter of the interaction control, wherein the display parameter of the interaction control is configured to control a display effect of the operation control.

7. The method of claim 5, wherein said determining operation information of the gesture instruction comprises:
determining interaction operation information between the gesture instruction and the interaction control, and determining the interaction operation information as the operation information of the gesture instruction.

8. The method of claim 7, wherein said determining interaction operation information between the gesture instruction and the interaction control comprises:
based on the gesture instruction being selecting the interaction control and dragging the interaction control in a preset direction, acquiring dragging information; and
determining the dragging information as the interaction operation information.

9. The method of claim 8, wherein, the dragging information comprises a dragging duration or a dragging amplitude.

10. The method of claim 5, further comprising:
receiving a first adjusting instruction on the interaction control from the anchor user; and
parsing the first adjusting instruction to acquire a first adjusting parameter as the display parameter of the interaction control.

11. A method for live stream interaction, applied to a second client, and comprising:
receiving a first interaction request sent by a first client, wherein the first interaction request is generated by the first client in response to a voice instruction of an anchor user;
parsing interaction content carried in the first interaction request; and
displaying an operation control associated with the interaction content on a live stream interface of the second client.

12. The method of claim 11, further comprising:
receiving an operation instruction on the operation control from an audience user of the second client; and
in response to the operation instruction, generating a second interaction request based on a live stream account identifier of the second client, and feeding the second interaction request back to the first client.

13. The method of claim 11, wherein said displaying an operation control associated with the interaction content on a live stream interface of the second client, comprising:
displaying the interaction content in the operation control.

14. The method of claim 11, wherein the first interaction request carries a display parameter of an interaction control, the display parameter of the interaction control is configured to control a display effect of the operation control, said displaying an operation control associated with the interaction content on a live stream interface of the second client comprising:
displaying the operation control based on the display parameter of the interaction control on the live stream interface of the second client.

15. The method of claim 11, further comprising:
receiving a second adjusting instruction on the operation control from the audience user; and
parsing the second adjusting instruction to acquire a second adjusting parameter, and adjusting the display effect of the operation control based on the second adjusting parameter.

16. An apparatus for live stream interaction, applied to a first client, and comprising:
a first receiving module, configured to receive a voice instruction of an anchor user, and parse interaction information carried in the voice instruction;
an acquiring module, configured to acquire interaction content based on the interaction information; and
a first generation module, configured to generate a first interaction request based on the interaction content, and send the first interaction request to a second client, the first interaction request is configured to trigger the second client to display an operation control associated with the interaction content on a live stream interface.

17. The apparatus of claim 16, further comprising:
a second receiving module, configured to receive a second interaction request sent by the second client by triggering the operation control, the second interaction request comprising a live stream account identifier of the second client; and
a first display module, configured to display the live stream account identifier and the interaction content on a live stream interface of the first client.

18. The apparatus of claim 16, wherein,
the acquiring module is configured to, based on the interaction information comprising an interaction instruction word, compare the interaction instruction word with a preconfigured interaction keyword; and based on the interaction instruction word matching the interaction keyword, acquire the interaction content based on the interaction information.

19. The apparatus of claim 18, wherein,
the acquiring module is configured to identify interaction semantics corresponding to the interaction instruction word from the interaction information by using a preconfigured semantics identification rule, and generate the interaction content corresponding to the interaction semantics.

20. The apparatus of claim 16, wherein,
a second display module, is configured to, in response to acquiring the interaction content based on the interaction information, display an interaction control on a live stream interface of the first client, and receive a gesture instruction of an anchor user based on the interaction control;
a determining module, is configured to determine operation information of the gesture instruction, and generate a display parameter of the interaction control corresponding to the operation information; and
an adjusting module, is configured to adjust a display effect of the interaction control based on the display parameter of the interaction control.

21. The apparatus of claim 20, wherein,
the first generation module is configured to generate the first interaction request based on the interaction content and the display parameter of the interaction control, the display parameter of the interaction control is configured to control a display effect of the operation control.

22. The apparatus of claim 20, wherein, the determining module is configured to determine interaction operation information between the gesture instruction and the interaction control, and determine the interaction operation information as the operation information of the gesture instruction.

23. The apparatus of claim 22, wherein, the determining module is configured to, in response to the gesture instruction being selecting the interaction control and dragging the interaction control in a preset direction, acquire dragging information, and determine the dragging information as the interaction operation information.

24. The apparatus of claim 23, wherein, the dragging information comprises a dragging duration or a dragging amplitude.

25. The apparatus of claim 20, wherein, further comprising:
a third receiving module, configured to receive a first adjusting instruction on the interaction control from the anchor user; and
a first parsing module, configured to parse the first adjusting instruction to acquire a first adjusting parameter as the display parameter of the interaction control.

26. An apparatus for live stream interaction, applied to a second client, and comprising:
a fourth receiving module, configured to receive a first interaction request sent by a first client, wherein the first interaction request is generated by the first client in response to a voice instruction of an anchor user;
a second parsing module, configured to parse interaction content carried in the first interaction request; and
a display module, configured to display an operation control associated with the interaction content on a live stream interface of the second client.

27. The apparatus of claim 26, wherein, further comprising:
a fifth receiving module, configured to receive an operation instruction on the operation control from an audience user of the second client; and
a second generation module, configured to, in response to the operation instruction, generate a second interaction request based on a live stream account identifier of the second client, and feed the second interaction request back to the first client.

28. The apparatus of claim 26, wherein, the display module is configured to display the interaction content in the operation control.

29. The apparatus of claim 26, wherein, the first interaction request carries a display parameter of an interaction control, the display parameter of the interaction control is configured to control a display effect of the operation control, and the display module is configured to display the operation control based on the display parameter of the interaction control on the live stream interface of the second client.

30. The apparatus of claim 26, wherein,
the fifth receiving module is configured to receive a second adjusting instruction on the operation control from the audience user; and
the second parsing module is configured to parse the second adjusting instruction to acquire a second adjusting parameter, and adjust the display effect of the operation control based on the second adjusting parameter.

31. An electronic device, comprising:
a processor; and
a memory configured to store instructions executable by the processor;
wherein, the processor is configured to perform the executable instructions to implement:
receiving a voice instruction of an anchor user, and parsing interaction information carried in the voice instruction;
acquiring interaction content based on the interaction information; and
generating a first interaction request based on the interaction content, and sending the first interaction request to a second client, the first interaction request is configured to trigger the second client to display an operation control associated with the interaction content on a live stream interface.

32. An electronic device, comprising:
a processor; and
a memory configured to store instructions executable by the processor;
wherein, the processor is configured to perform the executable instructions to implement:
receiving a first interaction request sent by a first client, wherein the first interaction request is generated by the first client in response to a voice instruction of an anchor user;
parsing interaction content carried in the first interaction request; and
displaying an operation control associated with the interaction content on a live stream interface of the second client.

33. A non-transitory computer readable storage medium, wherein, when instructions in the non-transitory computer readable storage medium are performed by a processor of an electronic device, the electronic device is caused to perform the instructions to implement:
receiving a voice instruction of an anchor user, and parsing interaction information carried in the voice instruction;
acquiring interaction content based on the interaction information; and
generating a first interaction request based on the interaction content, and sending the first interaction request to a second client, the first interaction request is configured to trigger the second client to display an operation control associated with the interaction content on a live stream interface.

34. A non-transitory computer readable storage medium, wherein, when instructions in the non-transitory computer readable storage medium are performed by a processor of an electronic device, the electronic device is caused to perform the instructions to implement:
receiving a first interaction request sent by a first client, wherein the first interaction request is generated by the first client in response to a voice instruction of an anchor user;
parsing interaction content carried in the first interaction request; and
displaying an operation control associated with the interaction content on a live stream interface of the second client.
